(19) Europäisches Patentamt
European Patent Office
Office européen des brevets

(11) Veröffentlichungsnummer : **0 170 946**
**B1**

(12) # EUROPÄISCHE PATENTSCHRIFT

(45) Veröffentlichungstag der Patentschrift : **26.04.89**

(51) Int. Cl.⁴ : **C 08 L 25/12**, C 08 L 71/04

(21) Anmeldenummer : **85108900.3**

(22) Anmeldetag : **16.07.85**

(54) **Thermoplastische Formmassen aus Styrol-Acrylnitril-Copolymerisaten und Polyphenylenethern.**

(30) Priorität : **25.07.84 DE 3427405**

(43) Veröffentlichungstag der Anmeldung : **12.02.86 Patentblatt 86/07**

(45) Bekanntmachung des Hinweises auf die Patenterteilung : **26.04.89 Patentblatt 89/17**

(84) Benannte Vertragsstaaten : **BE DE FR GB IT NL**

(56) Entgegenhaltungen : **EP–A– 0 048 391**

(73) Patentinhaber : **BASF Aktiengesellschaft**
**Carl-Bosch-Strasse 38**
**D-6700 Ludwigshafen (DE)**

(72) Erfinder : **Taubitz, Christof**
**In der Dreispitz 15**
**D-6706 Wachenheim (DE)**
Erfinder : **Hambrecht, Juergen, Dr.**
**Werderstrasse 30**
**D-6900 Heidelberg (DE)**
Erfinder : **Swoboda, Johann, Dr.**
**Neuwiesenstrasse 28**
**D-6700 Ludwigshafen (DE)**
Erfinder : **Echte, Adolf, Dr.**
**Leuschnerstrasse 42**
**D-6700 Ludwigshafen (DE)**

**EP 0 170 946 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Formmassen auf der Grundlage von Styrol-Acrylnitril-Copolymerisaten und von Polyphenylenethern, die weitere Zusatzstoffe enthalten.

Thermoplastische Formmassen, die Styrolpolymerisate und Polyphenylenether enthalten, sind z. B. aus den US-PSen 3 383 435, 4 128 602 sowie 4 128 603 bekannt. Solche Formmassen eignen sich zur Herstellung von Formteilen, die im Vergleich zu solchen Formteilen, die nur das Styrolpolymerisat, aber nicht Polyphenylenether enthalten, eine bessere Wärmeformbeständigkeit haben. Formmassen, die Polyphenylenether und Styrol-Acrylnitril-Copolymerisate, die SAN- oder ABS-Polymerisate enthalten, haben sich bislang nicht eingeführt, da aufgrund von mangelnder Verträglichkeit der Mischungspartner die Eigenschaften der Formkörper weit unter den erwarteten Werten liegen. Es ist daher in der US-PS 4 360 618 als Lösung vorgeschlagen worden, Styrolpolymerisate, die 2 bis 8 Gew.% Acrylnitril einpolymerisiert enthalten, zur Herstellung von Formteilen zu verwenden. Doch zeigt sich, daß schon bei höheren Acrylnitrilgehalten, die über 8,5 % liegen, eine Unverträglichkeit mit dem Polyphenylenether auftritt, so daß Formkörper mit schlechten mechanischen Werten aus derartigen Mischungen erhalten werden.

Es ist in der US-PS 4 387 189 (= EP OS 48 391) vorgeschlagen worden, Styrolpolymerisate, z. B. Styrolcopolymerisate mit Acrylnitril, die Säure-, Säureanhydrid- oder Säurechloridgruppen enthalten, mit den endständigen OH-Gruppen von Polyphenylenethern umzusetzen. Derartige Umsetzungsprodukte können mit Styrolpolymerisaten und Polyphenylenethern gemischt werden, wobei aus derartigen Formmassen Formkörper mit verbesserten mechanischen Eigenschaften hergestellt werden können. Es zeigte sich jedoch, daß derartige Formmassen noch nicht voll befriedigen.

Der vorliegenden Erfindung liegt daher die Aufgabe zugrunde, thermoplastische Formmassen auf der Grundlage von Styrol-Acrylnitril-Copolymerisaten und von Polyphenylenethern zu schaffen, die zu Formteilen mit guten mechanischen Eigenschaften verarbeitet werden können.

Diese Aufgabe wird erfindungsgemäß gelöst durch thermoplastische Formmassen auf der Grundlage von Styrol-Acrylnitril-Copolymerisaten und Polyphenylenethern sowie gegebenenfalls weiteren Zusatzstoffen, die außerdem ein Pfropfpolymerisat enthalten mit Struktureinheiten der allgemeinen Formel

```
-(A)n-(B)m-(C)p-(D)q-
       |
       O
       |
      X-PPE            .
```

worin A ein in Mengen von 60 bis 91 Gew.-Teilen einpolymerisiertes vinylaromatisches Monomeres, B ein in Mengen von 0,3 bis 10 Gew.-Teilen einpolymerisiertes ursprünglich Hydroxylgruppen enthaltendes Monomeres, C ein in Mengen von 9 bis 40 Gew.-Teilen einpolymerisiertes Nitril-Monomeres und D ein in Mengen von 0 bis 20 Gew.-Teilen einpolymerisiertes, zu den zu A, B oder C führenden Monomeren unterschiedliches Monomeres darstellt, wobei sich die Gew.-Teile jeweils auf 100 Gew.-Teile ergänzen, wobei die Einheiten A, B, C und D statistisch, alternierend und/oder blockartig in der Hauptkette verteilt sind, n, m und p eine ganze Zahl und q gleich 0 oder eine ganze Zahl sein kann, X der Rest eines mindestens bifunktionellen Kopplungsmittels ist und PPE ein über ein endständiges Sauerstoffatom gebundener Polyphenylenetherrest bedeutet.

Unter thermoplastischen Formmassen sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die Mischungen enthalten als eine Komponente ein Styrol-Acrylnitril-Copolymerisat, das in 100 Teilen der Mischungen aus Styrol-Acrylnitril-Copolymerisat und Polyphenylether in Mengen von 90 bis 10 Teilen, vorzugsweise 30 bis 70 Teilen enthalten ist.

Unter Styrol-Acrylnitril-Copolymerisaten sollen im Rahmen dieser Erfindung sogenannte SAN-, ABS- und ASA-Polymerisate verstanden werden. SAN-Polymerisate sind Copolymerisate aus monovinylaromatischen Verbindungen und Nitrilmonomeren. Die vinylaromatischen Monomeren können Styrol oder auch alpha-Methylstyrol, p-Methylstyrol, Halogenstyrole wie Chlorstyrol oder ortho-Ethylstyrol oder Gemische dieser Monomeren sein. Bevorzugt ist jedoch Styrol. Von den Acrylnitrilmonomeren, die in dem SAN-Polymerisat in Mengen von 9 bis 40 Gew.% einpolymerisiert sind, kommen vor allem Acrylnitril oder Methacrylnitril in Frage. Die SAN-Polymerisate können außer den genannten Monomeren noch bis zu 20 % weitere Monomeren wie Methacrylsäureester, Acrylsäureester, z. B. Methylmethacrylat oder Ethylmethacrylat aber auch Butylacrylat oder 2-Ethyl-hexylacrylat sowie Methacrylamide oder Acrylamide aber auch Acrylsäure, Maleinsäureanhydrid oder Gemische dieser Verbindungen einpolymerisiert enthalten. Bevorzugt sind jedoch die SAN-Polymerisate, die lediglich Styrol- und Acrylnitril-Monomeren einpolymerisiert enthalten. Zu den Styrol-Acrylnitril-Copolymerisaten rechnet man auch die sogenannten ABS-Polymerisate, die eine Weichkomponente aus mit Styrol und Acrylnitril gepfropftem Butadienpolymerisaten enthalten. Die Weichkomponente kann auch aus gepfropftem EPDM oder einem Polypentamerkautschuk bestehen. Die ASA-Polymerisate enthalten einen gepfropften Acrylat-Kautschuk. ABS- bzw. ASA-Polymerisate sind bekannt. Sie sind z. B. in dem Buch von C. B. Bucknall « Toughened Plastics », Applied Science Publ., London (1977), S. 66-105) beschrieben. Man kann aber auch die Styrol-Acrylnitrilpolymerisate, z ; B. die SAN-Polymerisate mit Kautschuk abmischen und verwendet dabei Kautschuk mit einer Glastemperatur von unter 0 °C. Die Kautschuke können statistische Copolymerisate oder Blockpolymerisate sein, bevorzugt sind Styrol-Butadien-, Styrol-Isopren-Blockpolymerisate, bei denen gegebenenfalls die Dien-Komponente hydriert sein kann. Man mischt den Styrolacrylnitrilpolymerisaten zweckmäßig Kautschuk in solchen Mengen zu, daß die Mischung 3 bis 40 Gew.% des Kautschuks enthält. Man kann den Kautschuk auch zuerst mit dem Polyphenyloxid abmischen oder der erfindungsgemäßen Abmischung zugeben.

Die in den thermoplastischen Formmassen als weitere Komponente enthaltenen Polyphenylenether werden nach bekannten Verfahren aus in ortho-Position disubstituierten Phenolen durch oxidative Kupplung hergestellt. Dabei sollen mindestens 20 Einheiten miteinander verknüpft sein.

Beispielhaft seien genannt : Poly(2,5-dilauryl-1,4-phenylen) oxid, Poly(diphenyl-1,4-phenylen) oxid, Poly(2,6-dimethoxy-1,4-phenylen) oxid, Poly(2,6-diethoxy-1,4-polyphenylen) oxid, Poly(2-methoxy-6-ethoxy-1,4-phenylen)-oxid, Poly(2-ethyl-6-stearyloxy-1,4-phenylen) oxid, Poly(2,6-dichlor-1,4-phenylen) oxid, Poly(2-methyl-6-phenyl-1,4-phenylen) oxid, Poly(2,6-dibenzyl-1,4-phenylen) oxid, Poly(2-ethoxy-1,4-phenylen) oxid, Poly(2-chlor-1,4-phenylen) oxid, Poly(2,5-dibrom-1,4-phenylen) oxid. Ebenfalls geeignet sind Copolymere von verschiedenen Phenolen, wie 2,6-Dimethylphenol und 2,3,6-Trimethylphenol.

Besonders bevorzugt für die erfindungsgemäßen Abmischungen sind solche, bei denen die Substituenten Alkyle mit 1 bis 4 C-Atomen sind, wie Poly-(2,6-dimethyl-1,4-phenylen) oxid, Poly(2,6-diethyl-1,4-phenylen) oxid, Poly(2-methyl-6-ethyl-1,4-polyphenylen) oxid, Poly(2-methyl-6-propyl-1,4-polyphenylenoxid, Poly(2,6-dipropyl-1,4-phenylen) oxid und Poly(2-ethyl-6-propyl-1,4-phenylen) oxid.

100 Teile der Mischung aus Styrolacrylnitrilcopolymerisat und Polyphenylenether enthalten 10 bis 90 Teile des Polyphenylenethers, vorzugsweise 20 bis 75 Teile.

Die thermoplastischen Formmassen enthalten außer dem Gemisch aus Styrol-Acrylnitril-Copolymerisat und dem Polyphenylenether ein Pfropfpolymerisat der oben angegebenen allgemeinen Formel. In der allgemeinen Formel bedeutet A einpolymerisierte Einheiten, die vom Styrol, alpha-Methylstyrol oder p-Methylstyrol herrühren.

B sind Etherseitengruppen tragende Einheiten, die sich von Hydroxylgruppen tragenden Monomeren herleiten. Die Etherseitengruppen tragenden Einheiten B im Pfropfcopolymeren werden vorzugsweise aus Hydroxyalkyl-(meth)acrylaten und -(meth)acrylamiden gebildet. Besonders geeignet sind Hydroxyethyl(meth)acrylat, Hydroxypropyl-(meth)acrylat, Hydroxybutyl-(meth)acrylat, Hydroxypentyl-(meth)acrylat, Hydroxyhexyl(meth)acrylat, Hydroxydecyl-(meth)acrylat, Diethylenglykolmono(meth)acrylat, Triethylenglykolmono(meth)acrylat, Tetraethylenglykolmono(meth)acrylat, Dipropylenglykolmono(meth)acrylat, Tripropylenglykolmono(meth)acrylat, außerdem Hydroxymethylstyrol ; es können auch Gemische eingesetzt werden.

Die Einheiten C leiten sich von einpolymerisiertem Acrylnitril oder Methacrylnitril her.

Die Einheiten D sind einpolymerisierte Monomere eines anderen Aufbaus als der Monomeren von A, B oder C. Geeignete Monomere sind z. B. Methylacrylate oder Methylmethacrylate, Acrylsäure, Methacrylsäure oder Maleinsäureanhydrid. Die die Hauptkette bildenden Polymere aus den genannten Monomeren enthalten die Monomeren A in 91 bis 60 Gew.-Teilen, die Monomeren B in 0,3 bis 10 Gew.-Teilen, die Monomeren C in 9 bis 40 Gew.-Teilen und die Monomeren D 0 bis 20 Gew.-Teilen, wobei sich die Gewichtsteile jeweils auf 100 ergänzen. Das Molekulargewicht des Stammpolymerisates der Hauptkette des Pfropfpolymeren ist vorzugsweise 5 000 bis 1.000.000, insbesondere 10.000 bis 100.000. Dieses Stammpolymerisat, das die Hauptkette bildet, enthält Hydroxylgruppen, die von dem einpolymerisierten Monomeren B herrühren. Das Polyphenylenoxid ist über ein mindestens bifunktionelles Kopplungsmittel an das Monomere B gebunden.

Die Kopplungsmittel leiten sich bevorzugt von bifunktionellen organischen oder anorganischen Säurederivaten oder Alkylchlorsilanen ab.

Beispielhaft für bevorzugte Kopplungsmittel seien genannt : Adipinsäuredichlorid, Terephthalsäuredichlorid, Trimesoyldichlorid, Trimellitsäuredichlorid, Oxalsäuredichlorid, Pimelinsäuredichlorid, Glutarsäuredichlorid, Benzophenontetracarbonsäurechlorid, Oxydiacetyldichlorid, Oxybenzoyldichlorid, Sebacindisäurechlorid und Azealinsäuredichlorid, außerdem Phosgen. Andere bevorzugte Kopplungsmittel sind Phosphor oder Schwefel enthaltende Säurehalogenide wie Sulforyldichlorid, Phosphoroxytrichlorid, Alkyl-, Aryl- und Arylalkylphosphordichloride, Alkyl-, Aryl- und Arylalkylphosphordichloride. Besonders geeignet sind auch Silicium und Bor enthaltende Säurechloride, beispielhaft seien genannt Dialkyl-, -aryl- und -alkylaryldichlorsilane, Dialkoxy-, -aryloxy- oder -arylalkyloxydichlorsilane, Methyltrichlorsilan, Ethyltrichlorsilan, Amyltrichlorsilan, Vinyltrichlorsilan. Besonders bevorzugt sind Dimethyldichlorsilan, Phosgen und Oxalsäuredichlorid. Die Kopplungsmittel können auch in Gemischen eingesetzt werden. Das Kopplungsmittel wird bevorzugt zuerst mit dem Polyphenylenoxid umgesetzt.

Das Kopplungsmittel ist dann über ein endständiges Sauerstoffatom an einen Polyphenylenether gebunden. Dieser Polyphenylenetherrest der Seitenkette hat bevorzugt die oben angegebene Zusammensetzung, wobei besonders bevorzugt 20 bis 200, insbesondere 30 bis 100 Phenoleinheiten verbunden

sind. Das Pfropfpolymere enthält bevorzugt 15 bis 85, insbesondere 25 bis 60 Gew.% des Polyphenylenethers als Seitenkette.

Die Herstellung der erfindungsgemäß zu verwendenden Pfropfpolymeren ist Gegenstand der EP-A 156 990.

Die Zusammensetzung der Hauptkette des Pfropfpolymeren wird bevorzugt an die Zusammensetzung des Styrol-Acrylnitril-Copolymeren angepaßt. So ist es vorteilhaft, bei hohen (20 bis 40 Gew.%) Gehalten an ungesättigten Nitril-Monomeren im Styrol-Acrylnitril-Copolymeren den Gehalt an Nitrilmonomeren in der Hauptkette des Pfropfpolymeren ähnlich hoch zu wählen. Ohne an eine Theorie gebunden zu sein, erscheinen die Mischungen dann verträglicher zu sein, wodurch besonders gute mechanische Eigenschaften erhalten werden.

Die Pfropfpolymeren sind in der erfindungsgemäßen Abmischung vorzugsweise in Mengen von 0,3 bis 90 Gew.-Teilen, im besonderen von 5 bis 20 Gew.-Teilen, bezogen auf 100 Teile der Mischung aus Styrol-Acrylnitril-Copolymeren und Polyphenylenether enthalten.

Die erfindungsgemäßen Mischungen können außerdem Weichmacher und Verarbeitungshilfsmittel enthalten, weiterhin Stabilisatoren und Antioxidantien. Andere bekannte Zusätze sind Glasfasern, Glaskugeln, Kaolin, Quarz, Glimmer, Wollastonit, Talkum, Asbest, Titandioxid, Aluminiumoxid, Micobit, Kreide, calciniertes Aluminiumsilikat, Farbstoffe und Pigmente.

Die erfindungsgemäßen Mischungen zeichnen sich durch außerordentlich gute mechanische Eigenschaften aus. Besonders bei Acrylnitril-Gehalten über 9 Gew.% im Styrol-Acrylnitrilcopolymeren haben die erfindungsgemäßen Mischungen überraschend hohe mechanische Werte gegenüber Mischungen, die kein Pfropfpolymeres enthalten. Dies zeigt besonders ein Vergleich mit den Vergleichsbeispielen 4 bis 7 des US-Patentes Nr. 4 360 618. Besonders Zugfestigkeit und Kerbschlagzähigkeit zeigen außerordentlich bemerkenswerte Verbesserungen gegenüber den Abmischungen ohne Pfropfpolymeres. Überraschend ist der geringe Anteil an Pfropfpolymeren, der den erfindungsgemäßen Abmischungen zugesetzt werden muß. Dies ist besonders vorteilhaft, da die Hauptbestandteile der erfindungsgemäßen Abmischung aus handelsüblichen Polyphenylenethern und ABS- oder SAN-Polymeren bestehen können. Durch den hohen Acrylnitrilgehalt, der bei den erfindungsgemäßen Einstellungen verwendet werden kann, ist eine verbesserte Lösungsmittelbeständigkeit gegenüber Abmischungen aus Polyphenylenthern und Polystyrol offensichtlich.

Die in den Beispielen genannten Teile sind Gewichtsteile.

1. Herstellung der Pfropfpolymeren

Beispiel 1

100 g Polyphenylenether mit einer Grenzviskosität von $\mu = 0,60$ (gemessen bei 25 °C im Chloroform) werden mit Dimethyldichlorsilan in Toluol unter Verwendung von Tributylamin als Säurefänger umgesetzt. Das Umsetzungsprodukt wird anschließend zu 100 g eines Styrol-Acrylnitril-Copolymerisats (bestehend aus 72 Gew.% Styrol, 25 % Acrylnitril und 3 Gew.% Hydroxybutylacrylat, mit einem $M_w = 60.000$, hergestellt durch kontinuierliche Polymerisation) in Toluol unter Verwendung von Tributylamin als Säurefänger in 20 Min. zulaufen lassen. Man erhält das Pfropfpolymere (Nr. 1) durch Entfernen des Lösungsmittels.

Beispiel 2

100 g Polyphenylenether (gemäß Beispiel 1) werden mit Dimethyldichlorsilan umgesetzt. Das Umsetzungsprodukt wird anschließend zu 120 g eines Styrolcopolymerisats (gemäß Beispiel 1) in Toluol zulaufen lassen. Man erhält das Pfropfpolymere (Nr. 2).

Beispiel 3

100 g Polyphenylenether (gemäß Beispiel 1) werden mit Dimethyldichlorsilan in Toluol umgesetzt. Das Umsetzungsprodukt wird anschließend zu 100 g eines Styrolcopolymerisats (bestehend aus 62 Gew.% Styrol, 35 % Acrylnitril und 3 Gew.% Hydroxybutylacrylat, mit einem $M_w = 65.000$, hergestellt durch kontinuierliche Polymerisation) zugegeben. Man erhält das Pfropfpolymere (Nr. 3).

2. Herstellung der Mischungen ohne Kautschuk (siehe Tabelle 1)

Vergleichsbeispiel ohne Pfropfpolymere

Beispiel 4

45 Teile Polyphenylenether ($\mu = 0,6$, gemessen bei 25 °C in Chloroform) und 55 Teile eines SAN-Polymeren (bestehend aus 75 Gew.% Styrol und 25 Gew.% AN, mit einer VZ = 85, hergestellt durch kontinuierliche Polymerisation), werden in einem Zweischneckenextruder bei 250 °C miteinander gemischt.

Erfindungsgemäße Beispiele mit Pfropfpolymeren

Beispiel 5

45 Teile Polyphenylenether ($\mu = 0{,}6$) und 55 Teile eines SAN-Polymeren (bestehend aus 75 Gew.% Styrol und 25 Gew.% AN, gemäß Beispiel 4), und 10 Teile Pfropfpolymeren Nr. 1 (gemäß Beispiel 1) werden bei 250 °C in einem Extruder gemischt.

Beispiel 6, 7, 8, 12 und 13

Die Abmischungen werden analog Beispiel 5 hergestellt.

Beispiele 9 bis 11

Als SAN-Polymeres wird ein Polymeres aus 65 Gew.% Styrol und 35 Gew.% AN eingesetzt.

Beispiel 14

Gemäß der Lehre des US-Patentes Nr. 4 387 189 wird ein Copolymerisat aus 70 Gew.% Styrol, 25 Gew.% Acrylnitril und 5 Gew.% Maleinsäureanhydrid mit Polyphenylenether ($\mu = 0{,}6$) umgesetzt. Es werden dazu die Komponenten in einem Extruder bei 280 °C geschmolzen, homogenisiert und granuliert. Das reaktive Copolymere hat ein $M_n$ (osmometrisch gemessen) von 1.500.

3. Herstellung der Mischungen mit Kautschuk (Tabelle 2)

Vergleichsbeispiele ohne Pfropfpolymere

Beispiel 15

45 Teile Polyphenylenether ($\mu = 0{,}6$, gemessen bei 25 °C in Chloroform) und 55 Teile eines ABS-Polymeren, das einen gepfropften Polybutadien-Kautschuk und ein SAN-Polymeres mit einem Acrylnitrilgehalt von 35 Gew.% enthält, werden in einem Zweischneckenextruder bei 250 °C gemischt.

Beispiel 20

45 Teile Polyphenylenether (gemäß Beispiel 15) und 55 Teile eines ABS-Polymeren gemäß Beispiel 15 jedoch mit einem Acrylnitrilgehalt von 25 Gew.% werden wie oben abgemischt.

Erfindungsgemäße Beispiele mit Pfropfpolymeren

Beispiele 16 bis 19 und 21

Es wird zusätzlich ein Pfropfpolymeres eingesetzt (Tabelle 2).

(Siehe Tabellen Seite 6 ff.)

Tabelle 1

| Beispiel Nr. | PPE | Gew.-Teile SAN (% AN) | Kautschuk | Pfropfpolym. Beispiel Nr. | | Zugfestigkeit Fließen DIN 53455 N/mm$^2$ | Bruch DIN 53 455 N/mm$^2$ | Kerbschlagzähigkeit DIN 53 453 kJ/m$^2$ | Vicat-Wärmeformbeständigkeit DIN 53 460 °C | Transparenz Note* |
|---|---|---|---|---|---|---|---|---|---|---|
| 4 | 45 | 55 (25 %) | - | - | - | 36 | 36 | 3 | 98 | 3 |
| 5 | 45 | 55 (25 %) | - | 1 | 5 | 48 | 47 | 7 | 127 | 2 |
| 6 | 45 | 55 (25 %) | - | 1 | 10 | 55 | 50 | 8 | 134 | 1 |
| 7 | 45 | 55 (25 %) | - | 1 | 15 | 53 | 49 | 8 | 136 | 1 |
| 8 | 45 | 55 (25 %) | - | 1 | 20 | 52 | 49 | 8 | 130 | 1 |
| 9 | 45 | 55 (35 %) | - | - | - | 38 | 30 | 3 | 101 | 3 |
| 10 | 45 | 55 (35 %) | - | 1 | 10 | 44 | 43 | 6 | 115 | 2 |
| 11 | 45 | 55 (35 %) | - | 3 | 10 | 56 | 53 | 8 | 135 | 1 |
| 12 | 45 | 55 (25 %) | - | 2 | 10 | 50 | 46 | 7 | 131 | 2 |
| 13 | 30 | 70 (25 %) | - | 1 | 10 | 42 | 42 | 6 | 110 | 2 |
| 14 | 45 | 55 (35 %) | - | 14 | 10 | 28 | 32 | 4 | 105 | 3 |

* Note 1 : transparent, Note 2 : schwach trüb, Note 3 : trüb

Tabelle 2

| Beispiel Nr. | Gew.-Teile PPE | SAN (% AN) | Kautschuk | Pfropfpolym. Beispiel Nr. | Pfropfpolym. | Zugfestigkeit Fließen DIN 53455 N/mm² | Zugfestigkeit Bruch DIN 53 455 N/mm² | Kerbschlagzähigkeit DIN 53 453 kJ/m² | Vicat-Wärmeformbeständigkeit DIN 53 460 °C |
|---|---|---|---|---|---|---|---|---|---|
| 15 | 45 | 55 (35 %) | 10 | - | - | 27 | 27 | 3 | 94 |
| 16 | 45 | 55 (35 %) | 10 | 3 | 5 | 43 | 42 | 9 | 120 |
| 17 | 45 | 55 (35 %) | 10 | 3 | 10 | 45 | 45 | 11 | 135 |
| 18 | 45 | 55 (35 %) | 10 | 1 | 10 | 35 | 34 | 8 | 110 |
| 19 | 45 | 55 (35 %) | 15 | 3 | 10 | 40 | 43 | 12 | 130 |
| 20 | 45 | 55 (25 %) | 10 | - | - | 24 | 24 | 3 | 90 |
| 21 | 45 | 55 (25 %) | 10 | 1 | 10 | 43 | 43 | 11 | 138 |

## Patentansprüche

1. Thermoplastische Formmassen auf der Grundlage von Styrol-Acrylnitril-Copolymerisaten, Polyphenylenethern und gegebenenfalls weiteren Zusatzstoffen, dadurch gekennzeichnet, daß sie außerdem ein Pfropfpolymerisat enthalten mit Struktureinheiten der allgemeinen Formel

$$\begin{array}{l} -(A)_n-(B)_m-(C)_p-(D)_q- \\ \qquad\quad\;\; | \\ \qquad\quad\;\; O \\ \qquad\quad\;\; | \\ \qquad\quad\;\; X-PPE \end{array}$$

worin A ein in Mengen von 60 bis 91 Gew.-Teilen einpolymerisiertes vinylaromatisches Monomeres, B ein in Mengen von 0,3 bis 10 Gew.-Teilen einpolymerisiertes ursprünglich Hydroxylgruppen enthaltendes Monomeres, C ein in Mengen von 9 bis 40 Gew.-Teilen einpolymerisiertes Nitril-Monomeres und D ein in Mengen von 0 bis 20 Gew.-Teilen einpolymerisiertes, zu den zu A, B oder C führenden Monomeren unterschiedliches Monomeres darstellt, wobei sich die Gew.-Teile jeweils auf 100 Gew.-Teile ergänzen, wobei die Einheiten A, B, C und D statistisch, alternierend und/oder blockartig in der Hauptkette verteilt sind, n, m und p eine ganze Zahl und q gleich 0 oder eine ganze Zahl sein kann, X der Rest eines mindestens bifunktionellen Kopplungsmittels ist und PPE ein über ein endständiges Sauerstoffatom gebundener Polyphenylenetherrest bedeutet.

2. Thermoplastische Formmassen nach Anspruch 1, dadurch gekennzeichnet, daß sie, bezogen auf 100 Gew.-Teile des Gemisches aus Styrol-Acrylnitril-Copolymerisat und Polyphenylenether 0,3 bis 90 Gew.-Teile des Pfropfpolymerisates enthalten.

## Claims

1. A thermoplastic molding composition based on a styrene-acrylonitril copolymer and a polyphenylene ether with or without a further additive, which also contains a graft polymer having structural units of the general formula

$$\begin{array}{l} -(A)_n-(B)_m-(C)_p-(D)_q- \\ \qquad\quad\;\; | \\ \qquad\quad\;\; O \\ \qquad\quad\;\; | \\ \qquad\quad\;\; X-PPE \end{array}$$

where A is an aromatic vinyl monomer copolymerized in an amount of from 60 to 91 parts by weight, B is an originally hydroxyl-containing monomer copolymerized in an amount of from 0.3 to 10 parts by weight, C is a nitrile monomer copolymerized in an amount of from 9 to 40 parts by weight, and D is a monomer copolymerized in an amount of from 0 to 20 parts by weight other than the monomers which lead to A, B or C, the parts by weight always adding up to 100 parts by weight, and the units A, B, C and D being distributed randomly, alternatingly or blockwise in the main chain, n, m and p are each integers, q is equal to 0 or an integer, X is the radical of an at least bifunctional coupling agent, and PPE is a polyphenylene ether radical attached via a terminal oxygen atom.

2. A thermoplastic molding composition as claimed in claim 1, which, based on 100 parts by weight of the mixture of styrene-acrylonitrile copolymer and polyphenylene ether, contains from 0.3 to 90 parts by weight of the graft polymer.

## Revendications

1. Masses à mouler thermoplastiques à base de copolymères styrène/acrylonitrile, de poly(oxydes de phénylène) et éventuellement d'autres additifs, caractérisées en ce qu'elles contiennent en outre un polymère greffé ayant des unités structurales de formule générale

$$\begin{array}{l} -(A)_n-(B)_m-(C)_p-(D)_q- \\ \qquad\quad\;\; | \\ \qquad\quad\;\; O \\ \qquad\quad\;\; | \\ \qquad\quad\;\; X-PPE \end{array}$$

dans laquelle A est un monomère vinylaromatique polymérisé à raison de 60 à 91 parties en poids, B est un monomère contenant initialement des groupements hydroxy polymérisé à raison de 0,3 à 10 parties en

poids, C est un monomère nitrile polymérisé à raison de 9 à 40 parties en poids et D représente un monomère différent des monomères conduisant à A, B ou C, polymérisé à raison de 0 à 20 parties en poids, en complètant les parties en poids à chaque fois à 100 parties en poids, les motifs A, B, C et D étant répartis dans la chaîne principale de façon statistique, alternée et/ou séquencée, n, m et p peuvent être des nombres entiers et q peut être égal à 0 ou à un nombre entier, X est le reste d'un élément de liaison au moins bifonctionnel et PPE représente un reste poly(oxyde de phénylène) lié par un atome d'oxygène terminal.

2. Masses à mouler thermoplastiques selon la revendication 1, caractérisées en ce qu'elles contiennent 0,3 à 90 parties en poids du polymère greffé pour 100 parties en poids du mélange de copolymère styrène/acrylonitrile et de poly(oxyde de phénylène).